(19) Europäisches Patentamt
European Patent Office
Office européen des brevets

(11) EP 0 748 849 A1

(12) **DEMANDE DE BREVET EUROPEEN**

(43) Date de publication:
**18.12.1996 Bulletin 1996/51**

(51) Int Cl.[6]: **C08L 83/08**, C08G 77/388

(21) Numéro de dépôt: **96420205.5**

(22) Date de dépôt: **14.06.1996**

(84) Etats contractants désignés:
**AT BE CH DE DK ES FI FR GB GR IE IT LI LU NL PT SE**

(30) Priorité: **16.06.1995 FR 9507445**

(71) Demandeur: **RHONE-POULENC CHIMIE**
**92408 Courbevoie Cédex (FR)**

(72) Inventeurs:
- **Karrer, Philippe**
  **69006 - Lyon (FR)**
- **Mignani, Gérard**
  **69008 - Lyon (FR)**
- **Pontini, Bernard**
  **69360 - St-Symphorien D'Ozon (FR)**
- **Storet, Isabelle**
  **38300 - Les Eparres (FR)**

(74) Mandataire: **Trolliet, Maurice**
**RHONE-POULENC CHIMIE,**
**Direction de la Propriété Industrielle,**
**Centre de Recherches des Carrières,**
**B.P. 62**
**69192 Saint-Fons Cédex (FR)**

(54) **Composés silicones à fonctions amines cycliques stériquement encombrées, utiles pour stabilisation lumière et thermique des polymères**

(57) La présente invention concerne des polyorganosiloxanes linéaires, cycliques ou ramifiés ayant par molécule au moins trois motifs siloxyles dont au moins un motif fonctionnel de formule :

$$(R^1)_a XSi(O)_{\frac{3-a}{2}}$$

où $R^1$ représente un radical alkyle en C1 à C4 ou phényle, X renferme une fonction amine cyclique secondaire ou tertiaire, liée au silicium par une liaison Si-A-C où A est un reste comprenant un groupe acétal cyclique. X représente plus précisément un groupe monovalent de formule :

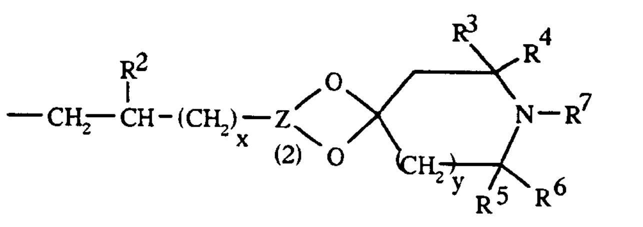

(II)

où : $R^2$ est H ou un radical alkyle ; Z est un radical trivalent de nature aliphatique, comme par exemple le radical - CO-CH-CO-, ou de nature aromatique, comme par exemple le radical

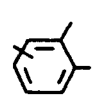

;

$R^3$ à $R^6$ sont des radicaux alkyle, phényle et/ou benzyle ; R7 est H ou un radical alkyle, alkylcarbonyle, phényle ou benzyle ; x = 0, 1, 2 ou 3 ; y = 0 ou 1.

La présente invention concerne également l'utilisation de pareils polyorganosiloxanes dans les polymères pour améliorer notamment leur photostabilisation.

EP 0 748 849 A1

## Description

La présente invention concerne, dans son premier objet, de nouveaux composés silicones comprenant par molécule au moins une fonction amine cyclique stériquement encombrée liée à l'atome de silicium par une liaison Si-A-C où A est un reste comprenant un groupe acétal cyclique; elle concerne également, dans son premier objet, des composés silicones comprenant par molécule au moins une fonction amine cyclique stériquement encombrée liée à l'atome de silicium par une liaison Si-A-C, et au moins une autre fonction compatibilisante liée au silicium par une liaison Si-C. Elle concerne aussi, dans un second objet, un procédé de préparation desdits composés silicones. Elle concerne encore, dans un troisième objet, l'utilisation de pareils composés dans les polymères pour améliorer leur résistance contre la dégradation sous l'effet des radiations ultra-violettes (UV), de l'oxygène de l'air et de la chaleur.

En effet, les polymères organiques, et plus particulièrement les polyoléfines et les polyalcadiènes, subissent une dégradation lorsqu'ils sont soumis aux agents extérieurs et notamment à l'action combinée de l'air et des radiations ultra-violettes solaires.

Cette dégradation est généralement limitée par l'introduction dans le polymère de petites quantités d'agents stabilisants.

Parmi ces stabilisants anti-UV, les amines cycliques à encombrement stérique, notamment les tétraméthyl-2,2,6,6 pipéridines, sont actuellement parmi les plus efficaces.

Cependant, en pratique, l'un des problèmes majeurs relatifs à l'utilisation de ces stabilisants anti-UV est d'obtenir un bon compromis entre leur efficacité, qui implique leur mobilité au sein du polymère, et la permanence de leur action, qui implique la mise en oeuvre de molécules à haute masse moléculaire présentant une excellente compatibilité avec les polymères à stabiliser.

Il a été proposé dans l'état antérieur de la technique de faire appel avantageusement à des polyorganosiloxanes portant des fonctions pipéridinyles stériquement encombrées. Comme documents illustrant cet état antérieur, on peut par exemple citer les documents brevets JP-A-01/096259, EP-A-0 338 393, EP-A-0 343 717, EP-A-0 358 190, EP-A-0 388 321 et EP-A-0 491 659.

Cependant, à la connaissance de la Demanderesse, aucun document de l'art antérieur ne décrit des polyorganosiloxanes qui d'une part présentent une structure dans laquelle chaque fonction amine cyclique stériquement encombrée est liée à l'atome de silicium par une liaison Si-A-C où A est un reste comprenant un groupe acétal cyclique, et d'autre part sont doués de propriétés utiles pour améliorer la résistance des polymères contre leur dégradation sous l'effet des radiations UV, de l'oxygène de l'air et de la chaleur.

Plus précisément, la présente invention concerne dans son premier objet, un polyorganosiloxane comprenant par molécule au moins 3 motifs siloxyles dont au moins un motif siloxyle fonctionnel de formule :

$$(R^1)_aXSi(O)_{\frac{3-a}{2}} \qquad (I)$$

dans laquelle :

- les symboles $R^1$ sont identiques ou différents et représentent un radical hydrocarboné monovalent choisi parmi les radicaux alkyles, linéaires ou ramifiés, ayant de 1 à 4 atomes de carbone et phényle ;
- le symbole X représente un groupe monovalent de formule :

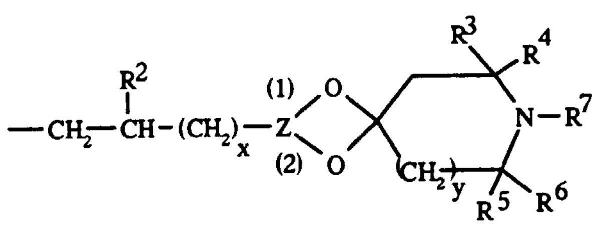

(II)

dans laquelle :

- $R^2$ représente un atome d'hydrogène ou un radical alkyle, linéaire ou ramifié, ayant de 1 à 3 atomes de carbone ;
- le symbole Z représente un groupe trivalent comprenant au moins 3 atomes de carbone et étant: un radical aliphatique saturé ou éthyléniquement insaturé, substitué ou non, pouvant contenir au moins un groupe carbonyle lié par ses valences libres à deux atomes constituant le groupe acétal cyclique :

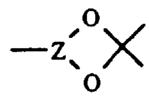 ;

ou un radical aromatique monocyclique, substitué ou non ; ou un radical aromatique polycyclique condensé, substitué ou non ; ou un radical aromatique polycyclique à plusieurs systèmes cycliques condensés ou non, substitués ou non, liés entre eux par des liens valentiels ou par des atomes ou groupements ; les atomes ou groupements pouvant relier ces systèmes cycliques aromatiques peuvent être par exemple les atomes d'oxygène et de soufre ou les groupements consistant dans les radicaux alkylènes, linéaires ou ramifiés, ayant de 1 à 3 atomes de carbone et les groupes -CO-, $-SO_2-$, -CONH-, -NH-, -COO- ;
- les liaisons (1) et (2) partant du symbole Z concement des atomes de carbone adjacents quand Z représente un radical aromatique, et des atomes de carbone adjacents ou en position β l'un par rapport à l'autre quand Z représente un radical aliphatique ;
- les radicaux $R^3$, $R^4$, $R^5$ et $R^6$, identiques ou différents, sont choisis parmi les radicaux alkyles, linéaires ou ramifiés, ayant de 1 à 3 atomes de carbone, phényle et benzyle ;
- $R^7$ est choisi parmi un atome d'hydrogène, les radicaux alkyles, linéaires ou ramifiés, ayant de 1 à 12 atomes de carbone, les radicaux alkylcarbonyles où le reste alkyle est un reste linéaire ou ramifié ayant de 1 à 8 atomes de carbone, les radicaux phényle et benzyle et un radical O ;
- x est un nombre entier choisi parmi 0, 1, 2 et 3 ;
- y est un nombre entier choisi parmi 0 et 1 ;

• a est un nombre choisi parmi 0, 1 et 2.

Le polyorganosiloxane peut présenter en outre au moins un autre motif fonctionnel de formule :

$$(R^1)_b WSi(O)_{\frac{3-b}{2}} \quad \text{(III)}$$

dans laquelle :

• les symboles $R^1$ ont les mêmes significations que celles données ci-avant à propos de la formule (I) ;
• le symbole W représente un groupe monovalent à fonction compatibilisante choisi parmi : un radical alkyle, linéaire ou ramifié, ayant plus de 4 atomes de carbone ; un radical de formule $-R^8-COO-R^9$ dans laquelle $R^8$ représente un radical alkylène, linéaire ou ramifié, ayant de 5 à 20 atomes et $R^9$ représente un radical alkyle, linéaire ou ramifié, ayant de 1 à 12 atomes de carbone ; un radical de formule $-R^{10}-O-(R^{11}-O)_c-R^{12}$ dans laquelle $R^{10}$ représente un radical alkylène, linéaire ou ramifié, ayant de 3 à 15 atomes de carbone, $R^{11}$ représente un radical alkylène, linéaire ou ramifié, ayant de 1 à 3 atomes de carbone, c est un nombre de 0 à 10 et $R^{12}$ représente un atome d'hydrogène, un radical alkyle, linéaire ou ramifié ayant de 1 à 12 atomes de carbone ou un radical acyle $-CO-R^{13}$ où $R^{13}$ représente un radical alkyle linéaire ou ramifié ayant de 1 à 11 atomes de carbone ;
• b est un nombre choisi parmi 0, 1 et 2.

Le (ou les) autre(s) motif(s) siloxyle(s) possible(s) du polyorganosiloxane réponde(nt) à la formule :

$$(R^1)_d(H)_e Si(O)_{\frac{4-(d+e)}{2}} \quad \text{(IV)}$$

dans laquelle :

• les symboles $R^1$ ont les mêmes significations que celles données ci-avant à propos de la formule (I) ;
• d est un nombre choisi parmi 0, 1, 2 et 3 ;
• e est un nombre choisi parmi 0 et 1;
• la somme d + e est au plus égale à 3.

Les motifs siloxyles de formule (I) quand il y en a plus de deux, peuvent être identiques ou différents entre eux ; la même remarque s'applique également aux motifs siloxyles de formules (III) et (IV).

Dans le présent mémoire, on comprendra que l'on définit par :

- "fonctions amines cycliques" : les groupes monovalents X ;
- "fonctions compatibilisantes" : les éventuels groupes monovalents W qui sont directement liés aux atomes de silicium (on forme alors dans ce cas des liaisons Si-C) ;
- "organopolysiloxanes (ou polymères) mixtes" : les polymères qui sont équipés à la fois de fonction(s) amine(s) cyclique(s) et de fonction(s) compatibilisante(s).

Compte-tenu des valeurs que peuvent prendre les symboles a, b, d et e, on doit comprendre encore que les polyorganosiloxanes selon l'invention peuvent donc présenter une structure linéaire, cyclique, ramifiée (résine) ou un mélange de ces structures. Lorsqu'il s'agit de polymères linéaires, ceux-ci peuvent éventuellement présenter jusqu'à 50 % en mole de ramification [motifs de types "T" ($RSiO_{3/2}$) et/ou "Q" ($SiO_{4/2}$)].

Lorsqu'il s'agit de résines polyorganosiloxanes, celles-ci sont constituées d'au moins deux types de motifs siloxyles différents, à savoir des motifs "M" ($R_3SiO_{1/2}$) et/ou "T" et éventuellement des motifs "D" ($R_2SiO_{2/2}$)] ; le rapport nombre de motifs "M" / nombre de motifs "O" et/ou "T" est en général compris entre 4/1 et 0,5/1, et le rapport nombre de motifs "D" / nombre de motifs "Q" et/ou "T" est en général compris entre 0 à 100/1.

De manière avantageuse, les nombres des motifs de formules (I), et éventuellement (III) et (IV) sont tels que les polyorganosiloxanes selon l'invention contiennent :

- au moins 0,5 % molaire, de préférence de 8 à 90 % molaire, de fonctions amines cycliques, et éventuellement
- au moins 0,5 % molaire, de préférence de 8 à 90 % molaire, de fonctions compatibilisantes. Les % molaires indiqués expriment le nombre de moles de fonctions pour 100 atomes de silicium.

Les radicaux $R^1$ préférés sont : méthyle, éthyle, n-propyle, isopropyle, n-butyle; de manière plus préférentielle, au moins 80 % molaire des radicaux $R^1$ sont des méthyles.

Les fonctions amines cycliques représentées par les groupes X sont choisies de manière préférentielle parmi les radicaux de formule (II) définie ci-avant dans laquelle les symboles $R^2$, $R^3$, $R^4$, $R^5$, $R^6$, $R^7$, x et y ont les significations données précédemment à propos de la formule (II) et le symbole Z représente un radical trivalent choisi parmi :

- un radical aliphatique de formule :

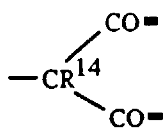

(II-1)

  où les valences libres de droite en caractère gras sont reliées aux atomes d'oxygène du groupe acétal cyclique, et $R^{14}$ représente un atome d'hydrogène, un radical alkyle, linéaire ou ramifié, ayant de 1 à 3 atomes de carbone, ou un radical de formule $-COOR^{14bis}$ ou $-NHCOR^{14bis}$ où $R^{14bis}$ représente un radical alkyle linéaire ou ramifié ayant de 1 à 3 atomes de carbone ; et
- un radical aromatique correspondant aux formules suivantes :

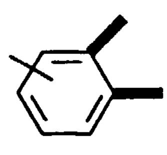

;

(II-2)

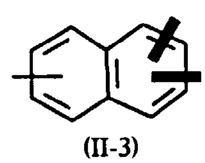

;

(II-3)

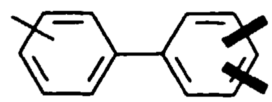 ; 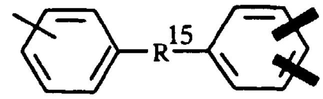

(II-4) (II-5)

où les valences libres en caractère gras de chaque système cyclique aromatique sont portées par deux atomes de carbone adjacents et $R^{15}$ représente -O-, -S-, un groupe alkylène linéaire ou ramifié ayant de 1 à 3 atomes de carbone, -CO-, $-SO_2-$, -CONH-, -NH- ou -COO-.

De manière plus préférentielle, les groupes X à fonction amine cyclique sont choisis parmi les groupes X de formule (II) définie ci-avant dans laquelle :

- $R^2$ représente un atome d'hydrogène ou un radical méthyle ;
- le symbole Z est un groupe trivalent de formule (II-1), où $R^{14}$ est un atome d'hydrogène, ou de formule (II-2) ;
- les radicaux $R^3$, $R^4$, $R^5$ et $R^6$, identiques, sont des méthyles ;
- le radical $R^7$ représente un atome d'hydrogène ou un radical méthyle ;
- x et y représente chacun un nombre entier égal à 1.

Les fonctions compatibilisantes optionnelles W préférées sont choisies : parmi un radical alkyle, linéaire ou ramifié, ayant de 5 à 18 atomes de carbone ; un radical de formule $-R^8-COO-R^9$ dans laquelle $R^8$ représente un radical alkylène, linéaire ou ramifié, ayant de 8 à 12 atomes et $R^9$ représente un radical alkyle, linéaire ou ramifié, ayant de 1 à 6 atomes de carbone ; un radical de formule $-R^{10}-O-(R^{11}-O)_c-R^{12}$ dans laquelle $R^{10}$ représente un radical alkylène, linéaire ou ramifié, ayant de 3 à 6 atomes de carbone, $R^{11}$ représente un radical alkylène linéaire ou ramifié ayant de 2 à 3 atomes de carbone, c est un nombre de 0 à 6 et $R^{12}$ représente un atome d'hydrogène, un radical alkyle, linéaire ou ramifié, ayant de 1 à 6 atomes de carbone ou un radical acyle $-CO-R^{13}$ où $R^{13}$ représente un radical alkyle, linéaire ou ramifié, ayant de 1 à 5 atomes de carbone.

De manière plus préférentielle, les fonctions compatibilisantes W sont choisies parmi les radicaux n-octyle, n-undécyle, n-dodécyle, n-tridécyle, décaméthylène carboxylate de méthyle ou d'éthyle.

La présente invention, prise dans son premier objet, vise plus précisément encore :

- des copolymères polydiorganosiloxanes éventuellement mixtes, linéaires, statistiques, séquencés ou à blocs, de formule moyenne :

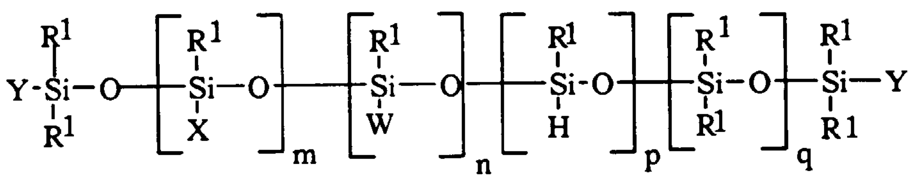 (V)

dans laquelle :

- les symboles $R^1$, X et W ont les significations générales données ci-avant à propos des formules (I) et (III);
- les symboles Y représente un radical monovalent choisi parmi $R^1$, X, W et un atome d'hydrogène ;
- m est un nombre entier ou fractionnaire allant de 0 à 180 ;
- n est un nombre entier ou fractionnaire allant de 0 à 180 ;
- p est un nombre entier ou fractionnaire allant de 0 à 10;
- q est un nombre entier ou fractionnaire allant de 0 à 100 ;
- avec les conditions selon lesquelles:
  - si m est différent de 0 et dans le cas éventuel des polymères mixtes si n est différent de 0 : la somme m + n + p + q se situe dans l'intervalle allant de 5 à 200 ; le rapport $100\ m / (m + n + p + q + 2) \geq 0,5$ ; et le rapport $100\ n / (m + n + p + q + 2) \geq 0,5$, ce rapport étant identique ou différent du précédent rapport ;
  - si m = 0 et dans le cas éventuel des polymères mixtes si n est différent de 0 : au moins un des substituants Y représente le radical X ; la somme m + n + p + q se situe dans l'intervalle allant de 5 à 100 ; et le rapport

$100\ n / (m + n + p + q + 2) \geq 0{,}5$ ;

- si m est différent de 0 et n = 0 : la somme m + p + q se situe dans l'intervalle allant de 5 à 100 ; le rapport $100\ m / (m + p + q + 2) \geq 0{,}5$ ; et dans le cas éventuel des polymères mixtes au moins un des substituants Y représente le radical W ;
- si m = 0 et n = 0 : la somme p + q se situe dans l'intervalle allant de 5 à 100 ; l'un des substituants Y étant le radical X ; et dans le cas éventuel des polymères mixtes l'autre substituant Y étant le radical W ;

et ceux de formule moyenne :

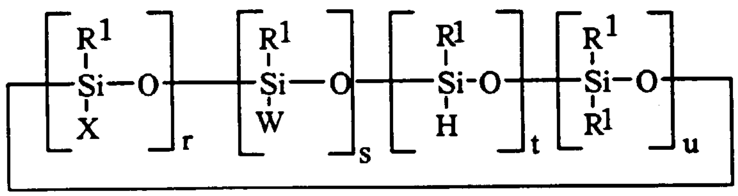

(VI)

dans laquelle :

- les symboles $R^1$, X et W ont les significations générales données ci-avant à propos des formules (I) et (III);
- r est un nombre entier ou fractionnaire allant de 1 à 9 ;
- s est un nombre entier ou fractionnaire allant de 0 à 9 ;
- t est un nombre entier ou fractionnaire allant de 0 à 0,5 ;
- u est un nombre entier ou fractionnaire allant de 0 à 5 ;
- la somme r + s + t + u se situe dans l'intervalle allant de 3 à 10.

Les polymères de formule (V), qui sont préférés (polymères dits PL1) ou très préférés (polymères dits PL2), sont ceux pour lesquels :

- les symboles Y représentent $R^1$ ;
- m est un nombre entier ou fractionnaire allant de 1 à 90 ;
- n est un nombre entier ou fractionnaire allant de 0 à 90 ;
- p est un nombre entier ou fractionnaire allant de 0 à 5 ;
- q est un nombre entier ou fractionnaire allant de 0 à 50 ;
- la somme m + n + p + q est un nombre entier ou fractionnaire allant de 10 à 100 ;
- le rapport 100 m / (m + n + p + q + 2) se situe dans l'intervalle allant de 8 à 90 ;
- avec la condition selon laquelle si n est différent de 0, le rapport 100 n / (m + n + p + q + 2) se situe dans l'intervalle allant de 8 à 90, ce rapport pouvant être identique ou différent du rapport précédent ;
- les radicaux $R^1$, X et W possèdent simultanément les définitions préférentielles (dans le cas des polymères PL1) ou plus préférentielles (dans le cas des polymères PL2) données ci-avant à propos de chacun d'eux.

Les polymères de formule (VI), qui sont préférés (polymères dits PC1) ou très préférés (polymères dits PC2), sont ceux pour lesquels :

- r est un nombre entier ou fractionnaire allant de 1 à 4,5 ;
- s est un nombre entier ou fractionnaire allant de 0 à 4,5 ;
- t est un nombre entier ou fractionnaire allant de 0 à 0,25 ;
- u est un nombre entier ou fractionnaire allant de 0 à 2,5 ;
- la somme r + s + t + u est un nombre entier ou fractionnaire allant de 3 à 5 ;
- les radicaux $R^1$, X et W possèdent simultanément les définitions préférentielles (dans le cas des polymères PC1) ou plus préférentielles (dans le cas des polymères PC2) données ci-avant à propos de chacun d'eux.

Les polymères de formule (V), qui conviennent spécialement bien (polymères dits PLS1) ou tout spécialement bien (polymères dits PLS2), sont les polymères PL1 ou PL2 définis ci-avant pour lesquels le symbole n est un nombre allant de 1 à 90 .

Les polymères de formule (VI), qui conviennent spécialement bien (polymères dits PCS1) ou tout spécialement bien (polymères dits PCS2), sont les polymères PC1 ou PC2 définis ci-avant pour lesquels le symbole s est un nombre allant de 1 à 4,5.

De manière avantageuse, les organopolysiloxanes éventuellement mixtes de l'invention peuvent être obtenus à

partir, et ceci constitue le second objet de l'invention :

- des organohydrogénopolysiloxanes (H) correspondants, qui sont exempts de fonction(s) amine(s) cyclique(s) X et de fonction(s) compatibilisante(s) W,
- du (ou des) composé(s) organique(s) éthyléniquement insaturé(s) en bout de chaîne (Ψ) dont dérive(nt) la (ou les) fonction(s) amine(s) cyclique(s) X,
- et éventuellement du (ou des) composé(s) éthyléniquement insaturé(s) en bout de chaîne (Ξ) dont dérive(nt) la (ou les) fonction(s) W.

Ainsi, les polyorganosiloxanes éventuellement mixtes de l'invention peuvent être obtenus en mettant en oeuvre :

- dans le cas de polymères à fonction(s) amine(s) cyclique(s) uniquement : une réaction d'addition (hydrosilylation), ou
- dans le cas de polymères mixtes à fonction(s) amine(s) cyclique(s) et à fonction(s) compatibilisante(s) : deux réactions d'additions (hydrosilylations) simultanées ou successives,

ce à partir : des organohydrogénopolysiloxanes (H) correspondants exempts des fonctions X et W, du (ou des) composé(s) organique(s) éthyléniquement insaturé(s) en bout de chaîne (Ψ) dont dérive(nt) la (ou les) fonction(s) X et éventuellement du (ou des) composé(s) éthyléniquement insaturé(s) en bout de chaîne (Ξ) dont dérive(nt) le (ou les) fonction(s) W.

Ces réactions d'hydrosilylations peuvent être réalisées à une température de l'ordre de 20 à 200°C, de préférence de l'ordre de 60 à 120°C, en présence d'un catalyseur à base d'un métal du groupe du platine ; on peut citer en particulier les dérivés et complexe du platine décrits dans US-A-3 715 334, US-A-3 814 730, US-A-3 159 601, US-A-3 159 662.

Les quantités de catalyseur mises en oeuvre sont de l'ordre de 1 à 300 parties par million, exprimées en métal par rapport au milieu réactionnel.

Dans la définition de la "mole de (Ψ)", on considérera comme entité élémentaire l'insaturation oléfinique susceptible de réagir avec (H) par hydrosilylation. De même dans la définition de la "mole de (Ξ)", on considérera comme entité élémentaire l'insaturation oléfinique susceptible de réagir avec (H) par hydrosilylation.

Les quantités de réactifs pouvant être mises en oeuvre correspondent généralement à un rapport molaire [(Ψ) + éventuellement (Ξ)] / SiH [de (H)] qui est de l'ordre de 1 à 5, de préférence de l'ordre de 1 à 2.

Les réactions d'hydrosilylations peuvent avoir lieu en masse ou, de préférence, au sein d'un solvant organique volatil tel que le toluène, le xylène, le méthylcyclohexane, le tétrahydrofuranne, l'heptane, l'octane ou l'isopropanol ; le milieu réactionnel peut contenir en outre un agent tampon consistant notamment en un sel alcalin d'un acide monocarboxylique comme par exemple l'acétate de sodium.

En fin de réactions, les polyorganosiloxanes éventuellement mixtes bruts qui sont obtenus peuvent être purifiés notamment par passage sur une colonne remplie d'une résine échangeuse d'ions et/ou par simple dévolatilisation des réactifs introduits en excès et éventuellement du solvant mis en oeuvre, par un chauffage opéré entre 100 et 180°C sous pression réduite.

Les organohydrogénopolysiloxanes (H) servant par exemple à la préparation des polydiorganosiloxanes mixtes linéaires de formule (V) sont ceux de formule :

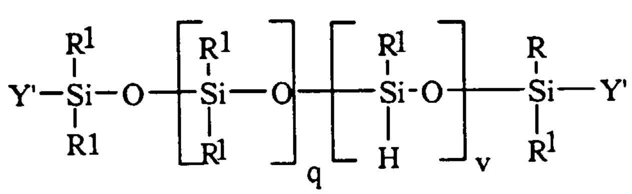

(VII)

dans laquelle :

- les symboles $R^1$ et q ont les significations générales ou préférentielles données ci-avant à propos de la formule (V) ;
- les symboles Y' représentent $R^1$ ou un atome d'hydrogène ;
- v est un nombre entier ou fractionnaire égal à m + n + p ;
- avec la condition selon laquelle, si v = 0, q est un nombre se situant dans l'intervalle allant de 5 à 100 et alors au moins un des radicaux Y' représentent un atome d'hydrogène.

Les organohydrogénopolysiloxanes (H) servant par exemple à la préparation des polydiorganosiloxanes mixtes cycliques de formule (VI) sont ceux de formule :

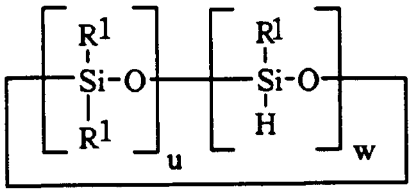

(VIII)

dans laquelle :

- les symboles $R^1$ et u ont les significations générales ou préférentielles données ci-avant à propos de la formule (VI) ;
- w est un nombre entier ou fractionnaire égal à r + s + t ;
- la somme u + w se situe dans l'intervalle allant de 3 à 10.

De tels organohydrogénopolysiloxanes (H) de formules (VII) et (VIII) sont connus dans la littérature et, pour certains, ils sont disponibles dans le commerce.

Les composés organiques insaturés (Ψ), dont dérivent les groupes X à fonction amine cyclique sont les composés de formule :

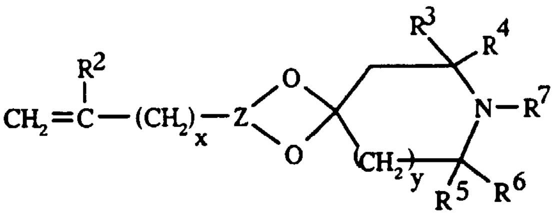

(IX)

dans laquelle les symboles $R^2$, Z, $R^3$, $R^4$, $R^5$, $R^6$, $R^7$, x et y ont les significations générales ou préférentielles données ci-avant à propos de la formule (II).

Comme composés (Ψ), on peut citer à titre d'exemples spécifiques les composés de formules :

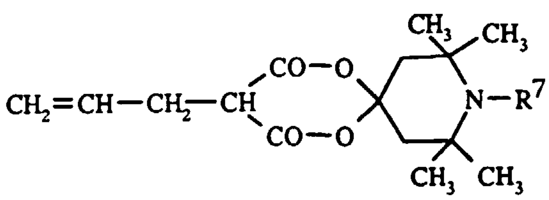

(IX-1)

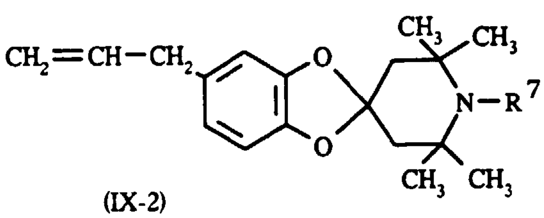

(IX-2)

dans lesquelles $R^7$ est un atome d'hydrogène ou un radical méthyle.

Les composés organiques insaturés (Ψ) de formule (IX), dont dérivent les groupes X à fonction amine cyclique, sont des composés qui, à la connaissance de la Demanderesse, sont des produits nouveaux.

Des composés insaturés (Ψ) de formule (IX) dans laquelle le symbole Z représente un reste aliphatique peuvent être préparés en faisant réagir, en présence d'un catalyseur acide :

- un orthodiphénol ou un acétal de formule :

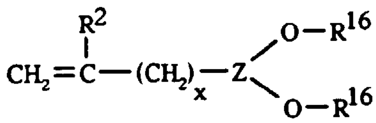

(X)

dans laquelle les symboles $R^2$, Z (reste aliphatique) et x ont les significations générales ou préférentielles données ci-avant à propos de la formule (II), et $R^{16}$ représente un atome d'hydrogène ou un radical alkyle linéaire ou ramifié ayant de 1 à 3 atomes de carbone,

- avec une cétone de formule :

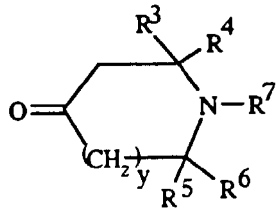

(XI)

dans laquelle les symboles $R^3$, $R^4$, $R^5$, $R^6$, $R^7$ et y ont les significations générales ou préférentielles données ci-avant à propos de la formule (II).

En ce qui concerne la manière pratique de mettre en oeuvre le procédé précité, on se reportera pour plus de détails au contenu du document suivant qui décrit, au départ d'autres réactifs, un mode opératoire applicable à la conduite du procédé considéré : cf. Heterocycles 32(3), page 529 et suivantes (1991).

S'agissant de l'orthodiphénol ou de l'acétal précurseur de formule (X), il peut être obtenu en faisant réagir :

- un composé chloré de formule :

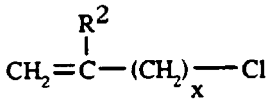

(XII)

- avec un orthodiphénol ou un acétal de formule :

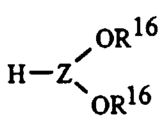

(XIII)

En ce qui concerne la manière pratique de conduire cette synthèse de l'orthodiphénol ou de l'acétal précurseur de formule (X), on se reportera pour plus de détails au contenu du document suivant : cf. Text Book of Pratical Organic Chemistry, 5ème édition (1989), page 682, VOGEL, Editeur LONGMAN.

S'agissant de la cétone précurseur de formule (XI), elle correspond à un produit connu et disponible dans le commerce.

Le schéma de synthèse, qui vient d'être décrit, des différents composés insaturés (Ψ) de formule (IX) où Z représente un reste aliphatique, s'applique particulièrement bien lorsque le symbole Z est le radical aliphatique de formule (11.1) mentionnée ci-avant et x est un nombre entier égal à 1, 2 ou 3.

Des composés insaturés (Ψ) de formule (IX) dans laquelle le symbole Z représente un reste aromatique peuvent

être préparés en faisant réagir, en présence d'un catalyseur acide :

- un orthodiphénol de formule :

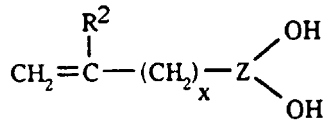

(XIV)

dans laquelle les symboles $R^2$, Z (reste aromatique) et x ont les significations générales ou préférentielles données ci-avant à propos de la formule (II),

- avec

  ❖ soit un acétal de formule (réaction de transacétalisation) :

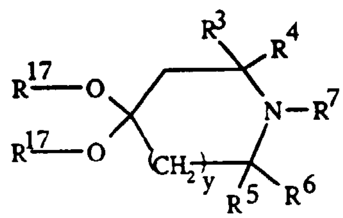

(XV)

  ❖ soit une cétone de formule (XI) (réaction d'acétalisation),

formules dans lesquelles les symboles $R^3$, $R^4$, $R^5$, $R^6$, $R^7$ et y ont les significations générales ou préférentielles données ci-avant à propos de la formule (II), et $R^{17}$ représente un radical alkyle linéaire ou ramifié ayant de 1 à 3 atomes de carbone.

En ce qui concerne la manière pratique de mettre en oeuvre le procédé précité, on se reportera pour plus de détails au contenu des documents suivants qui décrivent, au départ d'autres réactifs, des modes opératoires applicables à la conduite du procédé considéré : cf. transacétalisation : Synthesis (Février 1986), pages 122 à 125 ; acétalisation : FR-A-2 168 848 (de SANKYO).

S'agissant de l'orthodiphénol précurseur de formule (XIV), il peut être obtenu en faisant réagir :

- un composé chloré de formule (XII)
- avec un orthodiphénol ou un acétal de formule :

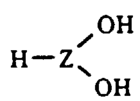

(XVI)

En ce qui concerne la manière pratique de conduire cette synthèse de l'orthodiphénol précurseur de formule (XIV), on se reportera pour plus de détails au contenu du document suivant : cf. JP-A-53/135943 (de UBE INDUSTRIE).

S'agissant de l'acétal précurseur de formule (XV), il peut être obtenu en faisant réagir, de manière connue en soi, un alcool aliphatique de formule $R^{17}$-OH. dans laquelle $R^{17}$ a la signification donnée ci-avant à propos de la formule (XV), avec la cétone de formule (XI) ; cf. Synthesis (Février 1986), pages 122 à 125.

Le schéma de synthèse, qui vient d'être décrit, des différents composés insaturés (Ψ) de formule (IX) où Z représente un reste aromatique, s'applique particulièrement bien lorsque le symbole Z est le radical aromatique de formule (11.2) mentionnée ci-avant et x est un nombre entier égal à 1 ou 2.

Quelle que soit la définition du symbole aromatique Z et la valeur de x, le produit brut de la réaction du réactif de formule (XVI) avec le composé chloré de formule (XII) peut contenir de faibles quantités d'orthodiphénol de départ (XVI) non réagi et/ou de composés di-insaturé de formule :

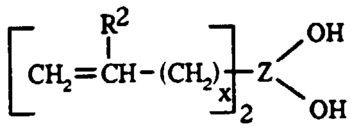

(XVII)

On procédera, en cas de présence de ces impuretés, à une purification du produit brut de la réaction considérée pour éliminer la totalité ou, à défaut, la majeure partie de ces impuretés. Le produit brut de la réaction peut contenir sans inconvénient jusqu'à 2 % en poids de ces impuretés.

Les composés insaturés (Ψ) de formule (IX) peuvent également être constitués en appliquant un autre schéma de synthèse dans lequel on prépare, dans un premier temps, un acétal cyclique de formule :

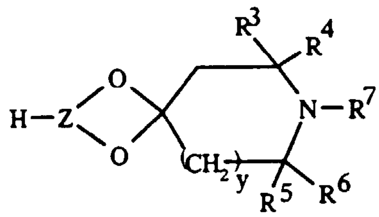

(XVIII)

puis on fait réagir, dans un second temps, l'acétal cyclique de formule (XVIII) avec le composé chloré de formule (XII).

La préparation de l'acétal cyclique de formule (XVIII) pourra être réalisée au départ d'un réactif de formule :

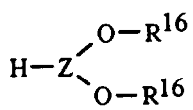

ou

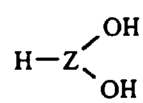

**quand Z = reste aliphatique**

**(XIII)**

**quand Z = reste aromatique**

**(XVI)**

en appliquant les divers modes opératoires décrits ci-avant à propos des voies de synthèse des composés insaturés (Ψ) de formule (IX), c'est-à-dire : réaction du réactif (XIII) avec la cétone (XI) ou réaction du réactif (XVI) avec l'acétal (XV) ou la cétone (XI).

Les composés insaturés (Ξ) dont dérivent les fonctions W sont des composés présentant une insaturation éthylénique, située en bout de chaîne, susceptible de réagir en hydrosilylation en présence d'un catalyseur à base d'un métal du groupe du platine.

Comme composés (Ξ), on peut citer à titre d'exemples l'octène-1, l'undécène-1, le dodécène-1, le tridécène-1. l'undécènoate de méthyle ou d'éthyle.

Les polyorganosiloxanes éventuellement mixtes selon l'invention peuvent être utilisés comme stabilisants contre la dégradation lumière oxydante et thermique des polymères organiques, et ceci constitue le troisième objet de l'invention.

A titre d'exemple de tels polymères organiques, on peut citer les polyoléfines, les polyuréthannes, les polyamides, les polyesters, les polycarbonates, les polysulfones, les polyéthers-sulfones, les polyéthers-cétones, les polymères acryliques, leurs copolymères et leurs mélanges.

Parmi ces polymères, les composés de l'invention ont une action plus particulièrement efficace avec les polyoléfines et les polyalcadiènes tels que le polypropylène, le polyéthylène haute densité, le polyéthylène basse densité linéaire, le polyéthylène basse densité, le polybutadiène, leurs copolymères et leurs mélanges.

Compte-tenu des larges possibilités de variations des nombres relatifs des différents motifs siloxyles présents dans la chaîne siloxanique des composés mixtes de l'invention, ces dits composés peuvent être facilement adaptables aux différents problèmes à résoudre.

Un autre objet encore de la présente invention consiste donc dans les compositions de polymère organique stabilisé contre les effets néfastes de la chaleur et des UV par une quantité efficace d'au moins un composé polyorganosiloxane éventuellement mixte.

Habituellement ces compositions contiennent de 0,04 à 20 milliéquivalents en fonction(s) amine(s) cyclique(s) stériquement encombrée(s) pour 100 g de polymère à stabiliser.

De préférence les compositions polymériques stabilisées selon l'invention contiennent de 0,20 à 4 milliéquivalents en fonction(s) amine(s) cyclique(s) stériquement encombrée(s) pour 100 g de polymère.

L'addition des composés polyorganosiloxanes éventuellement mixtes peut être effectuée pendant ou après la préparation des polymères.

Ces compositions peuvent contenir en outre tous les additifs et stabilisants utilisés habituellement avec les polymères qu'elles contiennent. Ainsi on peut mettre en oeuvre les stabilisants et additifs suivants : des antioxydants comme des monophénols alkylés, des hydroquinones alkylées, des sulfures de diphényles hydroxylés, des alkylidène-bisphénols, des composés benzyliques, des acylamino-phénols, des esters ou des amides de l'acide (di-tertiobutyl-3,5 hydroxy-4 phényl)-3 propionique, des esters de l'acide (dicyclohexyl-3,5 hydroxy-4 phényl)-3 propionique ; des stabilisants lumière comme des esters d'acides benzoïques éventuellement substitués, des esters acryliques, des composés du nickel, des oxalamides ; des phosphites et phosphonites ; des désactivants de métaux ; des composés destructeurs de peroxydes ; des stabilisants de polyamide ; des agents de nucléation ; des charges et agents de renforcement; d'autres additifs comme par exemple des plastifiants, des pigments, des azurants optiques, des ignifugeants.

Les compositions de polymères ainsi stabilisées peuvent être appliquées sous les formes les plus variées, par exemple sous la forme d'objets moulés, de feuilles, de fibres, de matériaux cellulaires (mousse), de profilés ou de produits de revêtement, ou comme feuillogènes (liants) pour peintures, vernis, colles ou ciments.

Les exemples suivants illustrent la présente invention.

**Exemple 1**

Préparation du composé insaturé ($\Psi$) à fonction amine cyclique de formule (IX-2) dans laquelle $R^7$ est un atome d'hydrogène.

1) Préparation du précurseur de formule (XIV) consistant dans l'allyl-4 orthodiphénol :

Dans un ballon en verre équipé d'une agitation mécanique, d'une ampoule de coulée, on charge 109,1 g (2,73 mole) de NaOH et 1522 g d'eau. Après dissolution de NaOH, on introduit 299,94 g (2,73 mole) d'orthodiphénol, 26,23 g (0,19 mole) de $CuCl_2$ et 33,93 g d'une solution aqueuse d'ammoniaque à 28 % en poids de $NH_4OH$ (soit 0,27 mole de base ammoniaque).

On coule ensuite en 1 heure 15 minutes, à une température comprise entre 36°C et 56°C, une solution de 213 g (2,73 mole) de chlorure d'allyle dans l'éther isopropylique (270 g). Après la fin de la coulée, on poursuit la réaction 35 minutes à 50°C. Au bout de ce temps, on refroidit le milieu réactionnel jusqu'à atteindre la température ambiante (23°C), puis on coule de l'acide HCl (sous forme de solution aqueuse à 36 % en poids d'HCl pur) jusqu'à obtenir un pH égal à 3.

On sépare les deux phases qui se sont formées en opérant à chaud (35°C). La phase aqueuse est ensuite extraite 3 fois avec chaque fois 200 $cm^3$ d'éther isopropylique. On rassemble les phases organiques et la solution obtenue est concentrée à l'évaporateur rotatif en opérant entre 25°C et 40°C sous une pression réduite de $3.10^2$Pa, puis elle est neutralisée avec 4,3 g de carbonate de sodium.

Le produit brut obtenu est alors purifié par distillation fractionnée sous 4 Pa; on obtient 244,8 g (rendement de 60 %) d'allyl-4 orthodiphénol (point d'ébullition sous une pression de 4Pa : 146°C ; structure confirmée par analyse par résonance magnétique nucléaire du proton).

2) Préparation du précurseur de formule (XV) consistant dans l'acétal diméthylique de la tétraméthyl-2,2,6,6 one-4 pipéridine (ou triacétone amine) :

Dans un ballon en verre, mis sous atmosphère d'azote, équipé d'une agitation mécanique et d'une ampoule de coulée, on charge 30 g (0,19 mole) de triacétone amine et 51 g de méthanol.

On coule ensuite lentement une solution de 31,97 g (0,192 mole) d'acide sulfonique dans 77 g de méthanol, puis on charge 40,6 g (0,38 mole) d'orthoformiate de méthyle.

On chauffe à reflux et distille la quantité attendue de formiate de méthyle. On distille ensuite le méthanol jusqu'à précipitation.

Le produit brut obtenu est filtré, puis lavé avec deux fois 100 $cm^3$ de toluène.

On obtient 68 g (rendement de 100 %) d'acétal diméthylique de la triacétone amine. La structure du produit est confirmée par résonance magnétique nucléaire du proton.

3) Préparation du composé insaturé (Ψ) de formule (IX-2) où $R^7 = H$ :

Dans un ballon en verre équipé d'une agitation mécanique et d'une colonne à distiller, on introduit 41,99 g (0,12 mole) d'acétal diméthylique de la triacétone amine, 18 g (0,12 mole) d'allyl-4 orthodiphénol, 1,05 g (0,006 mole) d'acide benzène sulfonique et 173 g de toluène.

On porte le mélange réactionnel à 61°C, température à laquelle l'ébullition commence. Le mélange est alors distillé pendant 12 heures en éliminant continuellement un azéotrope toluène-méthanol distillant entre 60 et 70°C sous pression atmosphérique.

On élimine ensuite le toluène et, après refroidissement à température ambiante (23°C), on ajoute dans la masse réactionnelle 200 $cm^3$ de chlorure de méthylène.

La phase organique ainsi obtenue est ensuite lavée avec deux fois 150 $cm^3$ d'une solution aqueuse de $NaHCO_3$ 1N. On sèche la phase organique sur du sulfate de magnésium, puis on évapore le chlorure de méthylène à température ambiante (23°C) sous une pression réduite jusqu'à $1{,}33.10^2$ Pa.

On obtient ainsi 26,7 g (rendement de 50 %) du produit insaturé (Ψ) désiré de formule (IX-2) où $R^7 = H$. L'analyse par résonance magnétique nucléaire du proton est en accord avec la structure suivante sur laquelle les déplacements chimiques des protons sont indiqués (RMN 1H ; solvant: $CDCl_3$ ; 360 MHz):

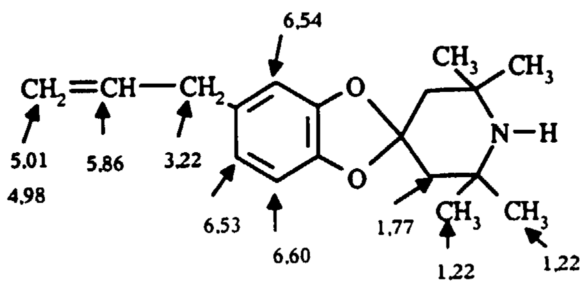

## Exemple 2

Préparation d'un organopolysiloxane mixte

Dans un réacteur de 1 litre équipé d'un système d'agitation, de deux ampoules de coulée et dont le volume intérieur est maintenu sous une atmosphère d'azote sec, on introduit 9,76 g (0,034 mole) du composé insaturé (Ψ) préparé à l'issue de l'exemple 1 et 10 $cm^3$ de toluène sec. On agite et porte la température du milieu réactionnel à 90°C.

On coule ensuite simultanément, de manière progressive sur une période de 5 heures :

- 4,12 g (soit 0,036 mole de fonction Si-H) d'une huile polyméthylhydrogénosiloxane dont les caractéristiques sont les suivantes :
    - Mn =1630 g ;
    - 868 méq de SiH / 100 g d'huile ;
    - structure moyenne :

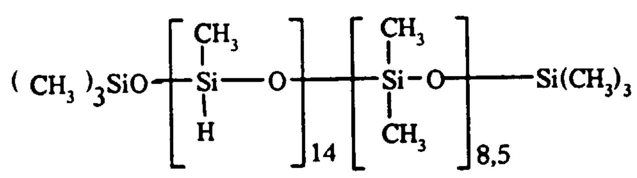

- et 11 $nm^3$ (ou 11 µl) d'une solution dans le toluène d'un catalyseur au platine (catalyseur dit de "KARSTEDT") contenant 11 % en poids de Pt métal.

Après avoir effectué la coulée, on laisse réagir le milieu 36 heures à 90°C. Au bout de ce temps le taux de transformation des fonctions Si-H est de 92 % en mole.

On ajoute ensuite 10 g (0,089 mole) d'octène-1 et on laisse réagir 16 heures à 90°C. Le taux de transformation des fonctions Si-H est de 95 % en mole.

On élimine ensuite le solvant par une dévolatilisation opérée pendant 3 heures à 100°C sous pression réduite de $6{,}65.10^2$ Pa.

On récupère ainsi 12 g d'une huile limpide dont les caractéristiques sont les suivantes :

- Mn = 5380 g ;
- 235 méq. de fonctions amines cycliques / 100 g, pour une théorie de 240 méq/100 g (cette indice de basicité est mesurée par titration de l'huile obtenue au moyen d'une solution d'acide perchlorique 0,02 N) ;
- structure moyenne de l'huile :

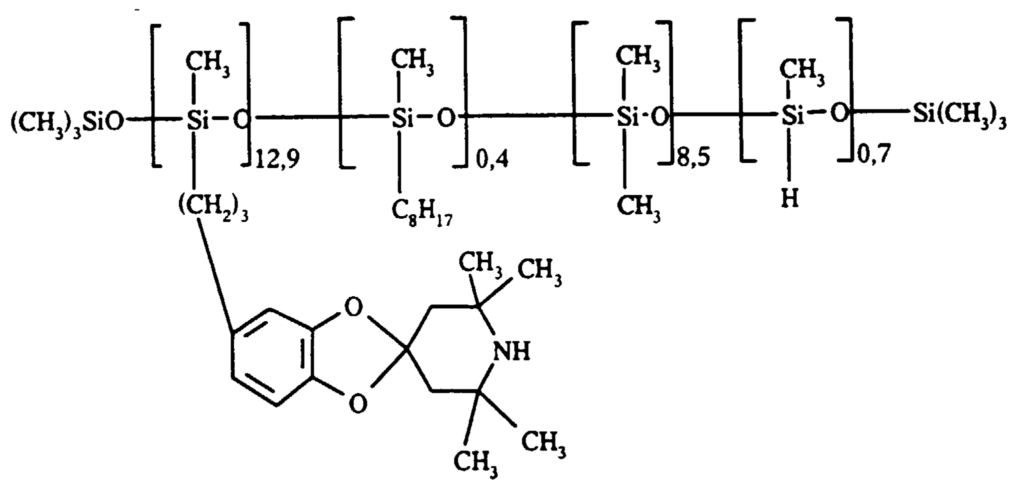

- proportion de fonctions amines X : 52,6 % (en moles de fonctions par 100 atomes de silicium) ;
- proportion de fonction W : 1,6 %.

<u>Exemple 3</u>

Photostabilisation du polypropylène

Dans un mélangeur lent, on prépare les 2 compositions a et b suivantes :

| | a | b |
|---|---|---|
| Polypropylène ELTEX® P HV001P (grade 10) | 100 g | 100 g |
| Stabilisant S1 selon l'exemple 2 contenant 235 méq en fonctions amines pour 100 g de stabilisant | 0,2 g | - |
| Stabilisant S2 commercial : CHIMASORB 944, (cf. formule ci-après), contenant 341 méq en fonctions pipéridinyles pour 100 g de stabilisant | -- | 0,2 g |

Formule du CHIMASORB 944 :

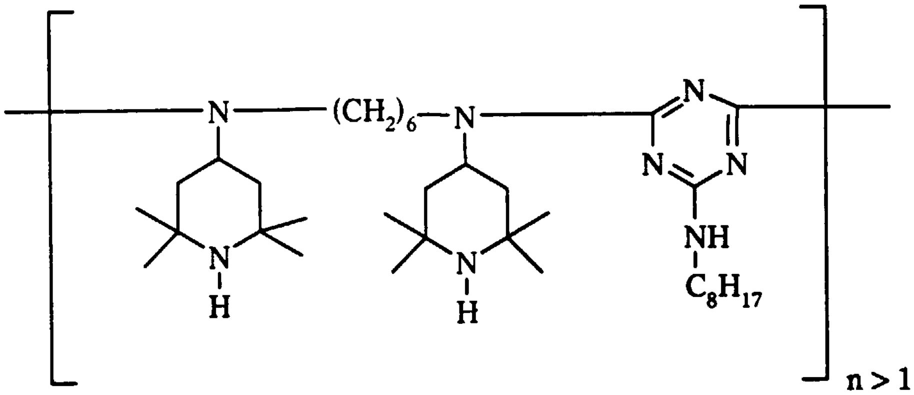

Les compositions précitées sont transformées, dans des conditions opératoires identiques, pour conduire à des films de 200 µm d'épaisseur.

On soumet à l'exposition du même rayonnement UV le film à base de polypropylène stabilisé avec S1 issu de la composition a (exemple 3) et le film à base de polypropylène stabilisé avec S2 issu de la composition b (essai b). Le vieillissement des films est suivi par spectrométrie infrarouge. On mesure dans chaque essai le temps d'exposition T aux rayons UV qui est nécessaire pour que l'absorbance en spectrométrie infrarouge de la bande carbonyle (à 1720 $cm^{-1}$) résultant de l'oxydation soit égale à l'absorbance d'une bande infrarouge de référence (bande $CH_2$ à 2722 $cm^{-1}$) ; autrement dit, on mesure le temps T nécessaire pour avoir dans chaque cas un degré de photooxydation tel que :

$$\frac{\text{absorbance de la bande C = 0 à 1720 cm-1}}{\text{absorbance de la bande } CH_2 \text{ à 2722 cm}^{-1}} = 1$$

A noter que plus le temps mesuré est long, meilleur est la protection conférée par le stabilisant (les groupes C = 0 apparaissent plus lentement).

Les résultats obtenus sont rassemblés dans le tableau suivant :

| | Film stabilisé | | Film non stabilisé |
|---|---|---|---|
| | Exemple 3 | Essai b | Témoin |
| Temps d'exposition T aux UV en heures | 80 | 70 | 20 |
| T/nombre de méq/ 100 g | 0,34 | 0,21 | |

**Revendications**

1. Polyorganosiloxane, caractérisé en ce qu'il comprend par molécule au moins 3 motifs siloxyles dont au moins un motif siloxyle fonctionnel de formule :

$$(R^1)_a XSi(O)_{\frac{3-a}{2}} \qquad (I)$$

dans laquelle :

- les symboles $R^1$ sont identiques ou différents et représentent un radical hydrocarboné monovalent choisi parmi les radicaux alkyles, linéaires ou ramifiés, ayant de 1 à 4 atomes de carbone et phényle ;

- le symbole X représente un groupe monovalent de formule :

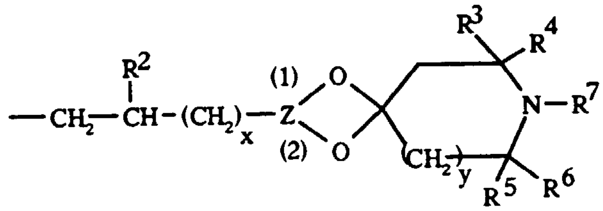

(II)

dans laquelle :

- $R^2$ représente un atome d'hydrogène ou un radical alkyle, linéaire ou ramifié, ayant de 1 à 3 atomes de carbone ;
- le symbole Z représente un groupe trivalent comprenant au moins 3 atomes de carbone et étant : un radical aliphatique saturé ou éthyléniquement insaturé, substitué ou non, pouvant contenir au moins un groupe carbonyle lié par ses valences libres à deux atomes constituant le groupe acétal cyclique :

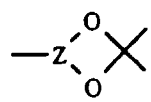

;

ou un radical aromatique monocyclique, substitué ou non ; ou un radical aromatique polycyclique condensé, substitué ou non ; ou un radical aromatique polycyclique à plusieurs systèmes cycliques condensés ou non, substitués ou non, liés entre eux par des liens valentiels ou par des atomes ou groupements ;
- les liaisons (1) et (2) partant du symbole Z concernent des atomes de carbone adjacents quand Z représente un radical aromatique, et des atomes de carbone adjacents ou en position β l'un par rapport à l'autre quand Z représente un radical aliphatique ;
- les radicaux $R^3$, $R^4$, $R^5$ et $R^6$, identiques ou différents, sont choisis parmi les radicaux alkyles, linéaires ou ramifiés, ayant de 1 à 3 atomes de carbone, phényle et benzyle ;
- $R^7$ est choisi parmi un atome d'hydrogène, les radicaux alkyles, linéaires ou ramifiés, ayant de 1 à 12 atomes de carbone, les radicaux alkylcarbonyles où le reste alkyle est un reste linéaire ou ramifié ayant de 1 à 8 atomes de carbone, les radicaux phényle et benzyle et un radical O ;
- x est un nombre entier choisi parmi 0, 1, 2 et 3 ;
- y est un nombre entier choisi parmi 0 et 1 ;

- a est un nombre choisi parmi 0, 1 et 2.

2. Polyorganosiloxane selon la revendication 1, caractérisé en ce que les radicaux $R^1$ sont : méthyle, éthyle, n-propyle, isopropyle, n-butyle.

3. Polyorganosiloxane selon la revendication 1 ou 2, caractérisé en ce que les fonctions amines cycliques représentées par les groupes X sont choisies parmi les radicaux de formule (II) définie ci-avant dans laquelle les symboles $R^2$, $R^3$, $R^4$, $R^5$, $R^6$, $R^7$, x et y ont les significations données précédemment à propos de la formule (II) et le symbole Z représente un radical trivalent choisi parmi :

- un radical aliphatique de formule :

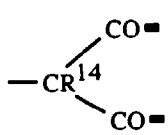

(II-1)

où les valences libres de droite en caractère gras sont reliées aux atomes d'oxygène du groupe acétal cyclique, et $R^{14}$ représente un atome d'hydrogène, un radical alkyle, linéaire ou ramifié, ayant de 1 à 3 atomes de

carbone ou un radical de formule -COOR$^{14bis}$ ou -NHCOR$^{14bis}$ où R$^{14bis}$ représente un radical alkyle linéaire ou ramifié ayant de 1 à 3 atomes de carbone ; et

- un radical aromatique correspondant aux formules suivantes :

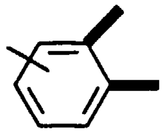
;
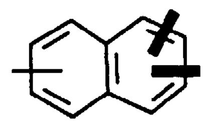
;

(II-2) (II-3)

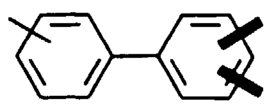
;
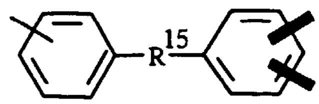

(II-4) (II-5)

où les valences libres en caractère gras de chaque système cyclique aromatique sont portées par deux atomes de carbone adjacents et R$^{15}$ représente -O-, -S-, un groupe alkylène linéaire ou ramifié ayant de 1 à 3 atomes de carbone, -CO-, -$SO_2$-, -CONH-, -NH- ou -COO-.

**4.** Polyorganosiloxane selon l'une quelconque des revendications 1 à 3, caractérisé en ce qu'il comprend en outre au moins un autre motif fonctionnel de formule :

$$(R^1)_bWSi(O)_{\frac{3-b}{2}} \qquad (III)$$

dans laquelle :

- les symboles R$^1$ ont les mêmes significations que celles données ci-avant à propos de la formule (I) ;
- le symbole W représente un groupe monovalent à fonction compatibilisante choisi parmi : un radical alkyle, linéaire ou ramifié, ayant plus de 4 atomes de carbone ; un radical de formule -R$^8$-COO-R$^9$ dans laquelle R$^8$ représente un radical alkylène, linéaire ou ramifié, ayant de 5 à 20 atomes et R$^9$ représente un radical alkyle, linéaire ou ramifié, ayant de 1 à 12 atomes de carbone ; un radical de formule -R$^{10}$-O-(R$^{11}$-O)$_c$-R$^{12}$ dans laquelle R$^{10}$ représente un radical alkylène, linéaire ou ramifié, ayant de 3 à 15 atomes de carbone, R$^{11}$ représente un radical alkylène, linéaire ou ramifié, ayant de 1 à 3 atomes de carbone, c est un nombre de 0 à 10 et R$^{12}$ représente un atome d'hydrogène, un radical alkyle, linéaire ou ramifié ayant de 1 à 12 atomes de carbone ou un radical acyle -CO-R$^{13}$ où R$^{13}$ représente un radical alkyle linéaire ou ramifié ayant de 1 à 11 atomes de carbone ;
- b est un nombre choisi parmi 0, 1 et 2.

**5.** Polyorganosiloxane selon la revendication 4, caractérisé en ce que les fonctions compatibilisantes optionnelles W sont choisies : parmi un radical alkyle, linéaire ou ramifié, ayant de 5 à 18 atomes de carbone ; un radical de formule -R$^8$-COO-R$^9$ dans laquelle R$^8$ représente un radical alkylène, linéaire ou ramifié, ayant de 8 à 12 atomes et R$^9$ représente un radical alkyle, linéaire ou ramifié, ayant de 1 à 6 atomes de carbone ; un radical de formule -R$^{10}$-O-(R$^{11}$-O)$_c$-R$^{12}$ dans laquelle R$^{10}$ représente un radical alkylène, linéaire ou ramifié, ayant de 3 à 6 atomes de carbone, R$^{11}$ représente un radical alkylène linéaire ou ramifié ayant de 2 à 3 atomes de carbone, c est un nombre de 0 à 6 et R$^{12}$ représente un atome d'hydrogène, un radical alkyle, linéaire ou ramifié, ayant de 1 à 6 atomes de carbone ou un radical acyle -CO-R$^{13}$ où R$^{13}$ représente un radical alkyle, linéaire ou ramifié, ayant de 1 à 5 atomes de carbone.

**6.** Polyorganosiloxane selon l'une quelconque des revendications 1 à 5, caractérisé en ce qu'il comprend en outre d'autre(s) motif(s) siloxyle(s) de formule :

$$(R^1)_d(H)_eSi(O)_{\frac{4-(d+e)}{2}} \qquad (IV)$$

dans laquelle :

- les symboles $R^1$ ont les mêmes significations que celles données ci-avant à propos de la formule (I) ;
- d est un nombre choisi parmi 0, 1, 2 et 3 ;
- e est un nombre choisi parmi 0 et 1 ;
- la somme d + e est au plus égale à 3.

**7.** Polyorganosiloxane selon l'une quelconque des revendications 1 à 6, caractérisé en ce qu'il est choisi parmi :

- des copolymères polydiorganosiloxanes éventuellement mixtes, linéaires, statistiques, séquencés ou à blocs, de formule moyenne :

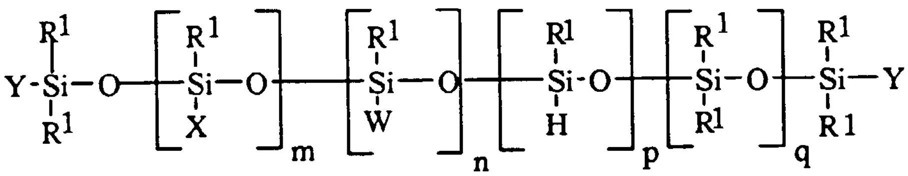

(V)

dans laquelle :

- les symboles $R^1$, X et W ont les significations générales données ci-avant à propos des formules (I) et (III) ;
- les symboles Y représente un radical monovalent choisi parmi $R^1$, X, W et un atome d'hydrogène ;
- m est un nombre entier ou fractionnaire allant de 0 à 180 ;
- n est un nombre entier ou fractionnaire allant de 0 à 180 ;
- p est un nombre entier ou fractionnaire allant de 0 à 10 ;
- q est un nombre entier ou fractionnaire allant de 0 à 100 ;
- avec les conditions selon lesquelles :
    - si m est différent de 0 et dans le cas éventuel des polymères mixtes si n est différent de 0 : la somme m + n + p + q se situe dans l'intervalle allant de 5 à 200 ; le rapport 100 m / (m + n + p + q + 2) ≥ 0,5 ; et le rapport 100 n / (m + n + p + q + 2) ≥ 0,5, ce rapport étant identique ou différent du précédent rapport;
    - si m = 0 et dans le cas éventuel des polymères mixtes si n est différent de 0 : au moins un des substituants Y représente le radical X ; la somme m + n + p + q se situe dans l'intervalle allant de 5 à 100 ; et le rapport 100 n / (m + n + p + q + 2) ≥ 0,5 ;
    - si m est différent de 0 et n = 0 : la somme m + p + q se situe dans l'intervalle allant de 5 à 100 ; le rapport 100 m / (m + p + q + 2) ≥ 0,5 ; et dans le cas éventuel des polymères mixtes au moins un des substituants Y représente le radical W ;
    - si m = 0 et n = 0 : la somme p + q se situe dans l'intervalle allant de 5 à 100 ; l'un des substituants Y étant le radical X ; et dans le cas éventuel des polymères mixtes l'autre substituant Y étant le radical W ;

et ceux de formule moyenne :

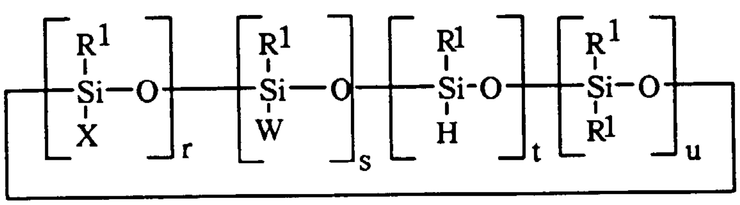

(VI)

dans laquelle :

- les symboles $R^1$, X et W ont les significations générales données ci-avant à propos des formules (I) et (III) ;
- r est un nombre entier ou fractionnaire allant de 1 à 9 ;
- s est un nombre entier ou fractionnaire allant de 0 à 9 ;
- t est un nombre entier ou fractionnaire allant de 0 à 0,5 ;
- u est un nombre entier ou fractionnaire allant de 0 à 5 ;
- la somme r + s + t + u se situe dans l'intervalle allant de 3 à 10.

**8.** Polyorganosiloxane linéaire mixte PLS1 selon la revendication 7, caractérisé en ce que :

- les symboles Y représentent $R^1$ ;
- m est un nombre entier ou fractionnaire allant de 1 à 90 ;
- n est un nombre entier ou fractionnaire allant de 1 à 90 ;
- p est un nombre entier ou fractionnaire allant de 0 à 5 ;
- q est un nombre entier ou fractionnaire allant de 0 à 50 ;
- la somme m + n + p + q est un nombre entier ou fractionnaire allant de 10 à 100 ;
- le rapport 100 m / (m + n + p + q + 2) se situe dans l'intervalle allant de 8 à 90 ;
- avec la condition selon laquelle si n est différent de 0, le rapport 100 n / (m + n + p + q + 2) se situe dans l'intervalle allant de 8 à 90, ce rapport pouvant être identique ou différent du rapport précédent;
- les radicaux $R^1$, X et W possèdent simultanément les définitions données ci-avant à propos de chacun d'eux dans les revendications 2, 3 et 5 précitées.

**9.** Polyorganosiloxane linéaire mixte PCS1 selon la revendication 7, caractérisé en ce que :

- r est un nombre entier ou fractionnaire allant de 1 à 4,5 ;
- s est un nombre entier ou fractionnaire allant de 1 à 4,5 ;
- t est un nombre entier ou fractionnaire allant de 0 à 0,25 ;
- u est un nombre entier ou fractionnaire allant de 0 à 2,5 ;
- la somme r + s + t + u est un nombre entier ou fractionnaire allant de 3 à 5 ;
- les radicaux $R^1$, X et W possèdent simultanément les définitions données ci-avant à propos de chacun d'eux dans les revendications 2, 3 et 5 précitées.

**10.** Procédé de préparation d'un polyorganosiloxane, éventuellement mixte, selon l'une quelconque des revendications 1 à 9, caractérisé en ce qu'il consiste à mettre en oeuvre :

- dans le cas de polymères à fonction(s) amine(s) cyclique(s) uniquement : une réaction d'addition (hydrosilylation), ou
- dans le cas de polymères mixtes à fonction(s) amine(s) cyclique(s) et à fonction(s) compatibilisante(s) : deux réactions d'additions (hydrosilylations) simultanées ou successives,

ce à partir : des organohydrogénopolysiloxanes (H) correspondants exempts des fonctions X et W, du (ou des) composé(s) organique(s) éthyléniquement insaturé(s) en bout de chaîne (Ψ) dont dérive(nt) la (ou les) fonction (s) X et éventuellement du (ou des) composé(s) éthyléniquement insaturé(s) en bout de chaîne (Ξ) dont dérive (nt) le (ou les) fonction(s) W, et que les quantités des réactifs engagés correspondent à un rapport molaire [(Ψ) + éventuellement (Ξ)] / SiH [de (H)] qui varie de 1 à 5.

**11.** Procédé selon la revendication 10, caractérisé en ce que les composés organiques insaturés (Ψ), dont dérivent les groupes X à fonction amine cyclique sont les composés de formule :

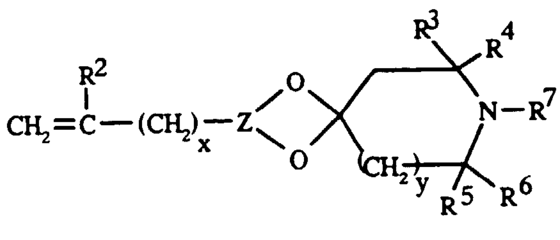

(IX)

dans laquelle les symboles $R^2$, Z, $R^3$, $R^4$, $R^5$, $R^6$, $R^7$, x et y ont les significations données ci-avant à propos de la formule (II).

**12.** Procédé selon la revendication 11, caractérisé en ce que les composés organiques insaturés (Ψ) de formule (IX) dans laquelle le symbole Z représente un reste aliphatique sont préparés en faisant réagir, en présence d'un catalyseur acide :

- un orthodiphénol ou un acétal de formule :

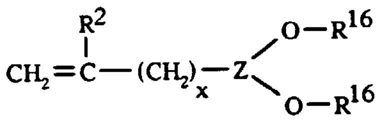

(X)

  dans laquelle les symboles $R^2$, Z (reste aliphatique) et x ont les significations données ci-avant à propos de la formule (II), et $R^{16}$ représente un atome d'hydrogène ou un radical alkyle linéaire ou ramifié ayant de 1 à 3 atomes de carbone,
- avec une cétone de formule :

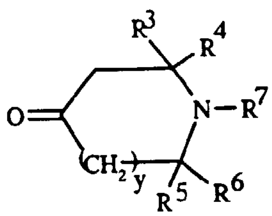

(XI)

  dans laquelle les symboles $R^3$, $R^4$, $R^5$, $R^6$, $R^7$ et y ont les significations données ci-avant à propos de la formule (II).

**13.** Procédé selon la revendication 11, caractérisé en ce que les composés organiques insaturés (Ψ) de formule (IX) dans laquelle le symbole Z représente un reste aromatique sont préparés en faisant réagir, en présence d'un catalyseur acide :

- un orthodiphénol de formule :

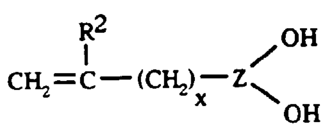

(XIV)

  dans laquelle les symboles $R^2$, Z (reste aromatique) et x ont les significations données ci-avant à propos de la formule (II),
- avec

  ❖ soit un acétal de formule (réaction de transacétalisation) :

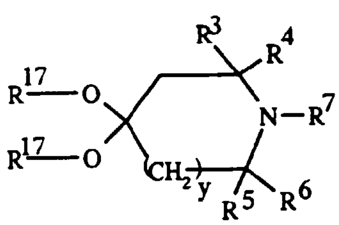

(XV)

❖ soit une cétone de formule (XI) (réaction d'acétalisation),

formules dans lesquelles les symboles $R^3$, $R^4$, $R^5$, $R^6$, $R^7$ et y ont les significations données ci-avant à propos de la formule (II), et $R^{17}$ représente un radical alkyle linéaire ou ramifié ayant de 1 à 3 atomes de carbone.

**14.** Procédé selon la revendication 11, caractérisé en ce que les composés organiques insaturés (Ψ) de formule (IX) sont préparés en faisant réagir un acétal cyclique de formule :

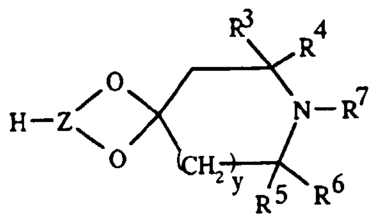

(XVIII)

avec un composé chloré de formule :

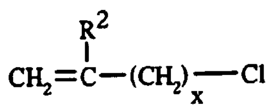

(XII)

formules dans lesquelles les symboles Z, $R^3$, $R^4$, $R^5$, $R^6$, $R^7$, y, $R^2$ et x ont les significations données ci-avant à propos de la formule (II).

**15.** A titre de moyen pour la mise en oeuvre du procédé selon la revendication 10, un nouveau composé organique insaturé (Ψ) de formule :

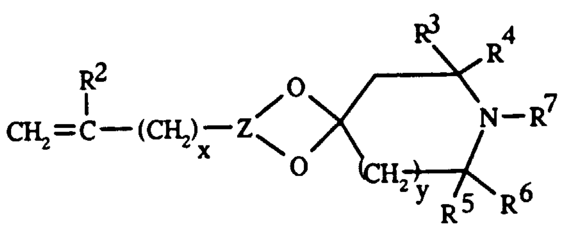

(IX)

dans laquelle les symboles $R^2$, Z, $R^3$, $R^4$, $R^5$, $R^6$, $R^7$, x et y ont les significations données ci-avant à propos des formules (II).

**16.** Utilisation d'une quantité efficace d'un polyorganosiloxane éventuellement mixte selon l'une quelconque des revendications 1 à 9, comme stabilisants contre la dégradation lumière, oxydante et thermique des polymères organiques.

**17.** Utilisation selon la revendication 16, caractérisée en ce que les polymères organiques à stabiliser sont choisis parmi les polyoléfines, les polyuréthannes, les polyamides, les polyesters, les polycarbonates, les polysulfones, les polyéthers-sulfones, les polyéthers-cétones, les polymères acryliques, leurs copolymères et leurs mélanges.

**18.** Composition de polymère organique stabilisé contre la dégradation lumière, oxydante et thermique, caractérisée en ce qu'elle comprend :

- pour 100 g de polymère organique à stabiliser,
- une quantité de polyorganosiloxane éventuellement mixte selon l'une quelconque des revendications 1 à 9 qui apporte de 0,04 à 20 milliéquivalents en fonction(s) amine(s) cyclique(s) stériquement encombrée(s).

**19.** Composition selon la revendication 18, caractérisée en ce que les polymères organiques à stabiliser sont choisis parmi les polyoléfines, les polyuréthannes, les polyamides, les polyesters, les polycarbonates, les polysulfones, les polyéthers-sulfones, les polyéthers-cétones, les polymères acryliques, leurs copolymères et leurs mélanges.

European Patent Office

# EUROPEAN SEARCH REPORT

Application Number
EP 96 42 0205

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | EP-A-0 343 717 (ENICHEM) * claim 1 * | 1 | C08L83/08 C08G77/388 |
| A | EP-A-0 358 200 (UNION CARBIDE) * claim 1 * | 1 | |
| A | EP-A-0 581 520 (GE PLASTICS JPN) * claim 1 * | 1 | |
| A,D | EP-A-0 491 659 (CIBA-GEIGY) * claim 1 * | 1 | |

TECHNICAL FIELDS SEARCHED (Int.Cl.6)
C08L
C08G

The present search report has been drawn up for all claims

| Place of search | Date of completion of the search | Examiner |
|---|---|---|
| THE HAGUE | 20 September 1996 | Lentz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)